# EUROPÄISCHE PATENTSCHRIFT

(11) **EP 2 931 546 B1**
(45) Veröffentlichungstag und Bekanntmachung des Hinweises auf die Patenterteilung: **11.01.2017**
(21) Anmeldenummer: 13802552.3
(22) Anmeldetag: 22.11.2013
(51) Int. Cl.: B60K 6/48, B60W 10/02, B60W 10/06, B60W 10/08, B60W 20/00, B60W 30/19, B60W 10/113, F16H 61/04, B60W 30/18

(54) **VERFAHREN ZUR STEUERUNG EINES ANTRIEBSSTRANGS EINES KRAFTFAHRZEUGES**
METHOD FOR CONTROLLING A DRIVE TRAIN OF A MOTOR VEHICLE
PROCÉDÉ DE COMMANDE D'UNE CHAÎNE CINÉMATIQUE DE PROPULSION D'UN VÉHICULE AUTOMOBILE

(30) Priorität: 11.12.2012 DE 102012024213
(43) Veröffentlichungstag der Anmeldung: 21.10.2015
(73) Patentinhaber: Volkswagen Aktiengesellschaft, 38440 Wolfsburg (DE)
(72) Erfinder: NEUMANN, Mathias, 37085 Göttingen (DE); BOTHE, Edgar, 31224 Peine (DE); SCHAEFER, Stephan, 38458 Wahrstedt (DE)
(86) Internationale Anmeldenummer: PCT/EP2013/074455
(87) Internationale Veröffentlichungsnummer: WO 2014/090545

(56) Entgegenhaltungen:
- EP-A1- 1 431 623
- EP-A2- 1 925 521
- DE-A1-102005 035 885
- DE-A1-102009 057 989
- US-A1- 2012 265 382

## Beschreibung

Die Erfindung betrifft ein Verfahren zur Steuerung eines Antriebsstrangs eines Kraftfahrzeuges, mit einem Verbrennungsmotor, einer motorisch und generatorisch betreibbaren E-Maschine, einer zwischen dem Verbrennungsmotor und der E-Maschine angeordneten Kupplung, und einem zwischen der E-Maschine und Rädern angeordneten Automatikgetriebe, wobei ein Gangwechsel in dem Automatikgetriebe manuell vom Fahrer auslösbar ist.

Im Stand der Technik sind so genannte Parallel-Hybrid-Kraftfahrzeuge bekannt, die eine zwischen dem Verbrennungsmotor und dem Getriebe angeordnete E-Maschine aufweisen, durch die im Schubbetrieb des Kraftfahrzeugs rekuperiert werden kann - die E-Maschine wird generatorisch betrieben und dadurch aus der kinetischen Energie des Kraftfahrzeugs eine Energie zum Aufladen eines Energiespeicher gewonnen wird. Damit die Aufladung des Energiespeichers sinnvoll und effektiv wird, wird die E-Maschine mit einem deutlich höheren negativen Drehmoment betrieben, als dem Mitschleppmoment des mitgeschleppten aber ausgeschalteten Verbrennungsmotors entsprechen würde. Solche Kraftfahrzeuge sind überwiegend mit Automatikgetrieben ausgestattet, die in automatischen und manuellen Betriebsart betrieben werden können. Die Schaltungen in dem Automatikgetriebe werden in beiden Betriebsart von einem Getriebesteuergerät durchgeführt, wobei in dem manuellen Betriebsart die Schaltungen nicht automatisch in der Abhängigkeit von aktuellen Fahrbetriebsgrößen durchgeführt werden, sondern manuell vom Fahrer ausgelöst werden. Wenn die Getriebe ein Lastschaltgetriebe, wie z. B. Planetengetriebe mit einem Drehmomentwandler oder ein Doppelkupplungsgetriebe ist, ist keine Unterbrechung der Rekuperation bei dem Gangwechsel notwendig. Wegen der deutlich höheren Größe des erzeugten negativen Drehmoments der E-Maschine kann der Gangwechsel in dem Automatikgetriebe aber nicht so schnell bzw. mit so steilem Drehzahlgradienten, wie bei einem nicht rekuperierenden Kraftfahrzeug durchgeführt werden, weil der Fahrer die Änderung des Bremsmoments als eine unkomfortable Änderung der Verzögerung des Kraftfahrzeugs spüren würde. Eine Übergabe des Drehmoments von dem Quellgang zu dem Zielgang d.h. auch Änderung der Drehzahl der Eingangswelle des Automatikgetriebes bei der aktuellen Geschwindigkeit des Kraftfahrzeugs von der dem Quellgang auf das dem Zielgang entsprechende Drehzahlniveau, muss mit deutlich kleineren Drehzahlgradienten durchgeführt werden, was natürlich zu deutlich längerer Zeit zwischen der Auslösung des Gangwechsels vom Fahrer und dem Ende des Schaltvorgangs führt.

Im bisher z. B. aus der DE 10 2009 057 989 A1 bekannten Verfahren werden die Schaltungen im Schubbetrieb nach manueller Auslösung eines Gangwechsels so durchgeführt, dass der Verbrennungsmotor während des Schaltvorgangs vom Antriebsstrang mitgeschleppt wird und dessen Drehzahl der Drehzahl der E-Maschine entspricht. Der Verbrennungsmotor wird somit bei Rückschaltungen mit Hilfe der kinetischen Energie des Kraftfahrzeugs hochgehdreht bzw. bei Hochschaltungen an die niedrigere Drehzahl abgebremst. Die Kupplung zwischen dem Verbrennungsmotor und der E-Maschine bleibt dabei geschlossen. Da die Änderung der Drehzahl der E-Maschine erst nach Einlegen des Zielgangs und nach Erreichen eines Arbeitspunktes einer Kupplung in dem Automatikgetriebe beginnen kann, kommt zu einer deutlichen Zeitspanne zwischen der Auslösung des Gangwechsels vom Fahrer und der Änderung der Drehzahl des Verbrennungsmotors. Da der Fahrer diese Änderung optisch am Drehzahlmesser und akustisch durch das Motorgeräusch folgen kann, ist für ihn eine solche Verzögerung dieser Rückmeldung verwirrend und kann als unangenehm wahrgenommen werden kann.

Weiterhin ist aus der EP 1 925 521 A2 ein Verfahren zum Zuschalten eines Verbrennungsmotors während der Fahrt eines durch E-Maschine angetriebenen Kraftfahrzeugs bekannt, bei dem der Verbrennungsmotor absichtlich auf überhöhte Drehzahl gebracht wird, um einen sportlichen Eindruck beim Fahrer zu erwecken. Eine Drehzahländerung beim Gangwechsel wird nicht offenbart.
Der Erfindung liegt daher die Aufgabe zugrunde, das Verfahren zur Steuerung des Antriebsstranges eines Parallel-Hybrid-Kraftfahrzeuges so gestalten, dass der Fahrer bei einem von ihm ausgelösten Gangwechsel eine bessere und erwartete Rückmeldung bekommt und die Rekuperation auch während des Gangwechsels durchgeführt werden kann.

Die zuvor gezeigte Aufgabe ist nun dadurch gelöst, dass während eines Schubbetriebs des Kraftfahrzeugs, in dem die E-Maschine generätorisch betrieben wird, nach einer manuellen Auslösung des Gangwechsels von einem Quellgang in einen Zielgang vom Fahrer
- die Kupplung, falls sie nicht geöffnet ist, wenigstens teilweise geöffnet wird,
- die Drehzahl des Verbrennungsmotors auf ein dem Zielgang und der aktuellen Geschwindigkeit des Kraftfahrzeugs entsprechendes Drehzahlniveau gebracht und weiter geregelt wird,
- der Gangwechsel in dem Automatikgetriebe durchgeführt wird,
- die Kupplung bei Erreichen einer synchronen Drehzahl des Verbrennungsmotors und der E-Maschine geschlossen wird.

Der Grundgedanke der Erfindung geht also dahin, der Verbrennungsmotor beim Gangwechsel getrennt vom Antriebsstrang zu halten um seine Drehzahl unabhängig von der Drehzahl der E-Maschine bzw. des Rests der Antriebsstrangs regeln zu können. Die E-Maschine bleibt dabei mit dem Antriebsstrand gekoppelt und somit muss die Rekuperation während des Gangwechsels nicht unterbrochen werden.
Wenn der Fahrer im Schubbetrieb des Kraftfahrzeugs mittels z. B. eines Schalthebels oder einer Betätigungseinrichtung am Lenkrad, einen Gangwechsel auslöst, wird zunächst die Kupplung zwischen dem Verbrennungsmotor und der E-Maschine wenigstens teilweise geöffnet, um einen von dem Antriebsstrang unabhängigen Drehzahlverlauf des Verbrennungsmotors zu ermöglichen. Die Kupplung muss nicht ganz geöffnet werden, sondern sie kann auch mit einem ausreichenden Schlupf betrieben werden. Falls der Verbrennungsmotor im Schubbetrieb ausgeschaltet mitgeschleppt wurde, muss eine Einspritzung bzw. Zündung rechtzeitig wiederhergestellt werden um den Verbrennungsmotor noch vor dessen Trennung von dem Antriebsstrang zu starten. Falls die Kupplung bei der Auslösung des Gangwechsels geöffnet ist und der Verbrennungsmotor durch eigene Kraft im Leerlauf läuft, muss die kupplung selbstverständlich nicht geöffnet werden.
Sobald die Kupplung genug geöffnet ist, wird die Drehzahl des Verbrennungsmotors auf ein dem Zielgang und der aktuellen Geschwindigkeit des Kraftfahrzeugs entsprechendes Drehzahlniveau gebracht und dann entsprechend der Änderung der aktuellen Geschwindigkeit des Kraftfahrzeugs während des Schaltvorgangs geregelt. Mittlerweile wird in dem Automatikgetriebe der Gangwechsel vom Quellgang in einen Zielgang durchgeführt. Unter dem Ausdruck Gangwechsel ist Änderung der Übersetzung zwischen den Rädern und der E-Maschine zu verstehen. Sobald die Drehzahl der E-Maschine und des Verbrennungsmotors synchron sind, wird die Kupplung geschlossen. Das Schließen der Kupplung kann instant bei Synchronität der Drehzahl erfolgen oder es kann der Verlauf der Drehzahl der E-Maschine und des Verbrennungsmotor ausgewertet werden und der Schließvorgang der Kupplung im Vorsprung noch vor der sich nähernde Synchronität der Drehzahl gestartet werden, um bei der Synchronität eine bestimmte die Kupplungskapazität bzw. Schließen der Kupplung zu erreichen. Der Ausdruck "geschlossene Kupplung" ist nicht ausschließlich wie eine Reibkupplung im Haftzustand zu verstehen, sondern auch so, dass die Kupplung mit einem gewissen geringeren Schlupf betrieben wird.
Somit hat der Fahrer den Eindruck, dass der Gangwechsel umgehend nach seinem Befehl durchgeführt wurde und die Rekuperation muss während des Schaltvorganges nicht unterbrochen werden.

Es gibt nun eine Vielzahl von Möglichkeiten das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden darf das erfindungsgemäße Verfahren anhand der folgenden Zeichnung und der dazu gehörenden Beschreibung näher erläutert werden. In der Zeichnung zeigt
- Fig. 1: eine schematische Darstellung eines Antriebsstrangs eines Parallel-Hybrid-Kraftfahrzeugs
- Fig. 2: einen schematischen Verlauf der Drehzahl des Verbrennungsmotors und der E-Maschine während einer Rückschaltung im Schubbetrieb bei verzögerndem Kraftfahrzeug.

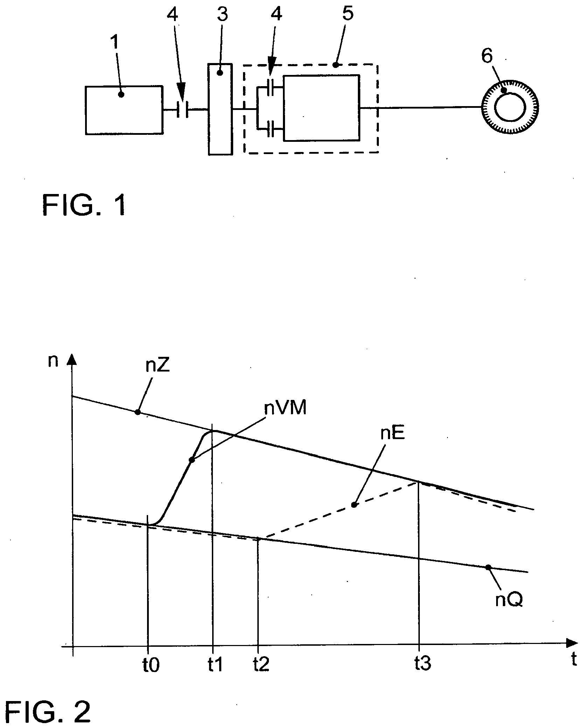

Auf der Fig. 1 ist ein Antriebsstrang eines Parallel-Hybrid-Kraftfahrzeugs schematisch gezeigt. Ein Verbrennungsmotor 1 ist über eine Kupplung 2 mit einer E-Maschine 3 verbindbar. An die E-Maschine 3 ist ein Automatikgetriebe 5 angeschlossen, wobei in diesem Ausführungsbeispiel das Automatikgetriebe 5 ein Doppelkupplungsgetriebe ist und die Verbindung zu der E-Maschine über eine Doppelkupplung 4 durchgeführt wird. Es kann auch ein anderes vorzugsweise Lastschaltgetriebe sein, z. B. ein Planetengetriebe mit einem Drehmomentwandler. Der Ausgang des Automatikgetriebes 5 ist mit den Rädern 6 des Kraftfahrzeugs gekoppelt. Der Verbrennungsmotor 1, die Kupplung 2, die E-Maschine 3, die Doppelkupplung 4 und das Automatikgetriebe 5 sind von einem oder mehreren, näher nicht gezeigten oder beschriebenen, Steuergeräten gesteuert. Die E-Maschine 3 ist mit einer Leistungselektronik und wenigstens einem Energiespeicher, vorzugsweise einer Batterie, gekoppelt werden, wobei diese auch nicht näher gezeigt sind.
Auf der Fig. 2 ist ein schematischer Verlauf der Drehzahl nVM des Verbrennungsmotors 1 und der E-Maschine während einer Rückschaltung im Schubbetrieb gezeigt. Dieses Ausführungsbeispiel zeigt ein verzögerndes Kraftahrzeug, d. h. das Kraftfahrzeug bewegt sich in der Ebene oder in Steigung und verzögert durch Wirkung von Fahrwiderständen. Eine Verwendung des Verfahrens ist aber nicht auf diesen Fall begrenzt, es kann sowohl bei einer Fahrt im Gefälle als auch bei einer Hochschaltung verwendet werden. Während des Schubbetriebs wird die E-Maschine 3 über die Doppelkupplung 4 und das Automatikgetriebe 5 mit den Antriebsrädern 6 verbunden und durch kinetische Energie des Kraftfahrzeugs und des Antriebsstrangs angetrieben. Im Automatikgetriebe 5 ist ein Quellgang eingelegt, dessen Übersetzung in Abhängigkeit von der aktuellen Geschwindigkeit des Kraftfahrzeugs die aktuelle Drehzahl nQ der diesem Gang zugeordneten Eingangswelle bestimmt. Die E-Maschine 3 dreht sich im Wesentlichen mit gleichen Drehzahl nE wie die dem Quellgang entsprechende Drehzahl nQ, sie wird generatorisch betrieben und erzeugt dadurch elektrische Energie, die in dem Energiespeicher gespeichert wird. Die Kupplung 2 ist geschlossen und der Verbrennungsmotor 1 wird vom Antriebsstrang mitgeschleppt, somit entspricht seine Drehzahl nVM der Drehzahl nE bzw. nQ.
Zum Zeitpunkt t0 betätigt der Fahrer ein Schalthebel oder z. B. eine Betätigungseinrichtung am Lenkrad, um einen Gangwechsel vom Quellgang in ein Zeilgang auszulösen. Der Zielgang ist in diesem Fall der nächste niedrigere Gang, dessen Übersetzung in Abhängigkeit von der aktuellen Geschwindigkeit des Kraftfahrzeugs die aktuelle Drehzahl nZ der diesem Gang zugeordneten Eingangswelle bestimmen würde. Falls in dem Zeitpunkt t0 der Verbrennungsmotor 1 ausgeschaltet mitgeschleppt wurde, wird er wieder in Betrieb gesetzt. Sobald der Verbrennungsmotor 1 läuft, wird die Kupplung 2 wenigstens so geöffnet, dass unterschiedliche Drehzahlverläufe des Verbrennungsmotors 1 und der E-Maschine 3 ermöglicht werden. Vom Steuergerät wird das Drehmoment des Verbrennungsmotors 1 erhöht und dessen Drehzahl nVM zum Zeitpunkt t1 an das dem Zielgang und der aktuelle Geschwindigkeit des Kraftfahrzeugs entsprechende Drehzahlniveau nZ gebracht. Diese Anhebung der Drehzahl nVM des Verbrennungsmotors 1 wird vorteilhaft rampenförmig durchgeführt. Um dem Fahrer eine erwartete Rückmeldung zu liefern, wird die zeitliche Änderung der Drehzahl nVM des Verbrennungsmotors 1 so eingestellt, dass sie im Wesentlichen dem Schaltverlauf bei einem Kraftfahrzeug ohne der generatorisch betreibbaren bzw. betriebenen E-Maschine entspricht. Dann wird die Drehzahl nVM des Verbrennungsmotors 1 vom Steuergerät so geregelt, dass die der aktuellen Geschwindigkeit des Kraftfahrzeugs entspricht, d.h. nVM = nZ. Dadurch entsteht für den Fahrer der Eindruck, dass der Gangwechsel umgehend nach seinem Befehl durchgeführt wurde, weil er optische und akustische Rückmeldung durch das Motorgeräusch und den Drehzahlmesser bekommt.
Vorzugsweise umgehend nach der Auslösung des Gangwechsel vom Fahrer zum Zeitpunkt t0 wird in dem Automatikgetriebe 5 ein Gangwechsel gestartet. Falls in dem drehmomentfreien Teilgetriebe der Doppelkupplung 4 ein nicht vom Fahrer gewünschter Zeilgang eingelegt wird, wird zunächst der Zielgang in diesem Teilgetriebe eingelegt. Im Zeitpunkt t2 ist der Zielgang in dem Teilgetriebe schon vorbereitet und es erfolgt ein überschnittener Wechsel von Kupplungskapazitäten beider Kupplungen d. h. der durch sie übertragenen Drehmomenten, der Doppelkupplung 4. Somit wird die Drehzahl nE der E-Maschine 3 an das Drehzahlniveau nZ des Zielganges gebracht. Diese Anhebung der Drehzahl nE der E-Maschine wird mit Hilfe der kinetischen Energie des Kraftfahrzeugs durchgeführt und der Rekuperationsbetrieb bleibt dabei erhalten. Falls in dem drehmomentfreien Teilgetriebe der Doppelkupplung 4 der vom Fahrer gewünschter Zeilgang schon eingelegt war, kann der Kupplungswechsel umgehend nach einer genügenden Öffnung der Kupplung 2 gestartet werden. In diesem Fall verschiebt sich der Zeitpunkt t2 näher zu dem Zeitpunkt t0, bzw. noch vor den Zeitpunkt t1.
Wenn die Drehzahl nVM des Verbrennungsmotors 1 synchron mit der Drehzahl nE der E-Maschine 3 ist, was hier zum Zeitpunkt t3 erreicht wird, wird die Kupplung 2 geschlossen. Nach Schließen der Kupplung 2 ist keine Regelung der Drehzahl nVM des Verbrennungsmotors 1 an die Drehzahl nZ notwendig und sie kann aufgehoben werden bzw. der Verbrennungsmotor 1 kann auch beim Bedarf ausgeschaltet werden. Somit wird der Steuerungsaufwand bzw. Verbrauch reduziert.
In einem hier nicht gezeigten anderen Ausführungsbeispiel, kann die Kupplung 2 im Zeitpunkt t0 der Auslösung des Gangwechsels geöffnet werden, wobei der Verbrennungsmotor 1 mit einer niedrigeren als dem Quellgang und der aktuellen Geschwindigkeit des Kraftfahrzeugs entsprechenden Drehzahl nVM läuft, typisch mit Leerlaufdrehzahl. Dann muss selbstverständlich nach Auslösung des Gangwechsels die Kupplung 2 nicht mehr geöffnet werden und es wird gleich mit Anpassung der Drehzahl nVM des Verbrennungsmotors 1 an das Drehzahlniveau nZ angefangen. Die weiteren Schritte verlaufen wie in dem oben beschriebenen Ausführungsbeispiel.

Im Ergebnis sind die eingangs genannten Nachteile vermieden und entsprechende Vorteile erzielt.

## Patentansprüche

1. Verfahren zur Steuerung eines Antriebsstrangs eines Kraftfahrzeuges, mit einem Verbrennungsmotor (1), einer motorisch und generatorisch betreibbaren E-Maschine (3), einer zwischen dem Verbrennungsmotor (1) und der E-Maschine (3) angeordneten Kupplung (2), und einem zwischen der E-Maschine (3) und Antriebsrädern (6) angeordneten Automatikgetriebe (5), wobei ein Gangwechsel in dem Automatikgetriebe (5) manuell vom Fahrer auslösbar ist, **dadurch gekennzeichnet, dass** während eines Schubbetrieb des Kraftfahrzeugs, in dem die E-Maschine (3) generatorisch betrieben wird, nach einer manuellen Auslösung des Gangwechsels von einem Quellgang in einen Zielgang vom Fahrer
- die Kupplung (2), falls sie nicht geöffnet ist, wenigstens teilweise geöffnet wird,
- die Drehzahl (nVM) des Verbrennungsmotors (1) auf ein dem Zielgang und der aktuellen Geschwindigkeit des Kraftfahrzeugs entsprechendes Drehzahlniveau (nZ) gebracht und weiter geregelt wird,
- der Gangwechsel in dem Automatikgetriebe (5) durchgeführt wird,
- die Kupplung (2) bei Erreichen einer synchronen Drehzahl (nVM, nE) des Verbrennungsmotors (1) und der E-Maschine (3) geschlossen wird.

2. Verfahren nach dem Anspruch 1 **dadurch gekennzeichnet, dass** die Drehzahl (nVM) des Verbrennungsmotors (1) bei der wenigstens teilweise geöffneten Kupplung (2) mit Hilfe des Drehmoments des Verbrennungsmotors (1) geregelt wird.

3. Verfahren nach einem der vorhergehenden Ansprüche **dadurch gekennzeichnet, dass** nach dem Schließen der Kupplung (2) die Regelung der Drehzahl (nVM) des Verbrennungsmotors (1) aufgehoben wird.

4. Verfahren nach einem der vorhergehenden Ansprüche **dadurch gekennzeichnet, dass** der Gangwechsel eine Rückschaltung ist und dass die Drehzahl (nVM) des Verbrennungsmotors (1) mittels Drehmomentanhebung des Verbrennungsmotors (1) an die entsprechende Drehzahlniveau (nZ) angehoben wird.

5. Verfahren nach einem der vorhergehenden Ansprüche **dadurch gekennzeichnet, dass** der zeitliche Verlauf der Änderung der Drehzahl (nVM) des Verbrennungsmotors (1) im Wesentlichen dem Schaltverlauf bei einem Kraftfahrzeug ohne der generatorisch betreibbaren oder betriebenen E-Maschine entspricht.

6. Verfahren nach einem der vorhergehenden Ansprüche **dadurch gekennzeichnet, dass** die Drehzahl (nVM) des Verbrennungsmotors (1) rampenförmig angehoben wird.

7. Verfahren nach einem der vorhergehenden Ansprüche **dadurch gekennzeichnet, dass** die Änderung der Drehzahl (nVM) des Verbrennungsmotors (1) der Änderung der Drehzahl (nE) der E-Maschine (3) zeitlich vorgezogen wird.

8. Verfahren nach einem der vorhergehenden Ansprüche **dadurch gekennzeichnet, dass** das Automatikgetriebe (5) ein Doppelkupplungsgetriebe ist.

9. Verfahren nach einem der vorhergehenden Ansprüche **dadurch gekennzeichnet, dass** der Zielgang einer anderen Reibschlusselement des Automatikgetriebes (5) als der Quellgang zugeordnet ist, wobei während des Gangwechsels ein überschnittener Wechsel von Kupplungskapazitäten der beiden Reibschlusselemente durchgeführt wird.

10. Verfahren nach einem der vorhergehenden Ansprüche **dadurch gekennzeichnet, dass** in dem Schubbetrieb im Zeitpunkt der manuellen Auslösung des Gangwechsels die Kupplung (2) geöffnet ist und der Verbrennungsmotor (1) mit einer niedrigeren als dem Quellgang und der aktuellen Geschwindigkeit des Kraftfahrzeugs entsprechenden Drehzahl (nVM) läuft.

## Claims

1. Method for controlling a drive train of a motor vehicle, having an internal combustion engine (1), an electric machine (3) which can be driven as a motor and as a generator, a clutch (2) which is arranged between the internal combustion engine (1) and the electric machine (3), and an automatic transmission (5) which is arranged between the electric machine (3) and the drive wheels (6), wherein a gear speed change in the automatic transmission (5) can be triggered manually by the driver, **characterized in that** during overrun operation of the motor vehicle in which the electric machine (3) is operated as a generator, after manual triggering of the gear speed change from a source gear speed into a target gear speed by the driver
- the clutch (2) is, if it is not opened, at least partially opened,
- the rotational speed (nVM) of the internal combustion engine (1) is adjusted to a rotational speed level (nZ) corresponding to the target gear speed and the current velocity of the motor vehicle, and is regulated further,
- the gear speed change in the automatic transmission (5) is carried out,
- the clutch (2) is closed when a synchronous rotational speed (nVM, nE) of the internal combustion engine (1) and of the electric machine (3) is reached.

2. Method according to Claim 1, **characterized in that** the rotational speed (nVM) of the internal combustion engine (1) is regulated at the at least partially opened clutch (2) using the torque of the internal combustion engine (1).

3. Method according to one of the preceding claims, **characterized in that** after the closing of the clutch (2), the regulation of the rotational speed (nVM) of the internal combustion engine (1) is cancelled.

4. Method according to one of the preceding claims, **characterized in that** the gear speed change is a shift down operation, and **in that** the rotation speed (nVM) of the internal combustion engine (1) is raised to the corresponding rotational speed level (nZ) by raising the torque of the internal combustion engine (1).

5. Method according to one of the preceding claims, **characterized in that** the time profile of the change in the rotational speed (nVM) of the internal combustion engine (1) corresponds essentially to the shift profile in a motor vehicle without the electric machine which can be or is operated as a generator.

6. Method according to one of the preceding claims, **characterized in that** the rotational speed (nVM) of the internal combustion engine (1) is raised in a ramp shape.

7. Method according to one of the preceding claims, **characterized in that** the change in the rotational speed (nVM) of the internal combustion engine (1) chronologically precedes the change in the rotational speed (nE) of the electric machine (3).

8. Method according to one of the preceding claims, **characterized in that** the automatic transmission (5) is a double-clutch transmission.

9. Method according to one of the preceding claims, **characterized in that** the target gear speed is assigned to a different frictionally locking element of the automatic transmission (5) than the source gear speed, wherein an overlapping change of clutch capacities of the two frictionally locking elements is carried out during the gear speed change.

10. Method according to one of the preceding claims, **characterized in that** in the overrun operation, the clutch (2) is opened at the time of manual triggering of the gear speed change, and the internal combustion engine (1) runs with a lower rotational speed (nVM) than that corresponding to the source gear speed and the current velocity of the motor vehicle.

## Revendications

1. Procédé de commande d'une chaîne cinématique d'un véhicule automobile, comprenant un moteur à combustion interne (1), une machine électrique (3) pouvant fonctionner en tant que moteur et en tant que générateur, un embrayage (2) disposé entre le moteur à combustion interne (1) et la machine électrique (3) et une boîte de vitesses automatique (5) disposée entre la machine électrique (3) et les roues motrices (6), un changement de rapport dans la boîte de vitesses automatiques (5) pouvant être déclenché manuellement par le conducteur, **caractérisé en ce que** pendant un fonctionnement en poussée du véhicule automobile, dans lequel la machine électrique (3) fonctionnant en que générateur, après déclenchement manuel du changement de rapport d'un rapport de vitesse initial dans un rapport de vitesse cible par le conducteur,
- l'embrayage (2), au cas où il n'est pas ouvert, est au moins en partie ouvert,
- le régime (nVM) du moteur à combustion interne (1) est amené à un niveau de régime (nZ) correspondant au rapport de vitesse cible et à la vitesse actuelle du véhicule automobile et est régulé davantage,
- le changement de rapport est effectué dans la boîte de vitesses automatiques (5),
- l'embrayage (2), une fois qu'un régime synchrone (nVM, nE) du moteur à combustion interne (1) et de la machine électrique (3) a été atteint, est fermé.

2. Procédé selon la revendication 1, **caractérisé en ce que** le régime (nVM) du moteur à combustion interne (1), lorsque l'embrayage (2) est au moins en partie ouvert, est régulé à l'aide du couple du moteur à combustion interne (1).

3. Procédé selon l'une quelconque des revendications précédentes, **caractérisé en ce qu'**après la fermeture de l'embrayage (2), la régulation du régime (nVM) du moteur à combustion interne (1) est supprimée.

4. Procédé selon l'une quelconque des revendications précédentes, **caractérisé en ce que** le changement de rapport est un rétrogradage et **en ce que** le régime (nVM) du moteur à combustion interne (1) est augmenté au moyen d'une augmentation de couple du moteur à combustion interne (1) jusqu'au niveau de régime correspondant (nZ).

5. Procédé selon l'une quelconque des revendications précédentes, **caractérisé en ce que** l'allure dans le temps de la variation de régime (nVM) du moteur à combustion interne (1) correspond essentiellement à l'allure de la commutation dans un véhicule automobile sans machine électrique fonctionnant ou pouvant fonctionner en tant que générateur.

6. Procédé selon l'une quelconque des revendications précédentes, **caractérisé en ce que** le régime (nVM) du moteur à combustion interne (1) est augmenté en forme de rampe.

7. Procédé selon l'une quelconque des revendications précédentes, **caractérisé en ce que** la variation du régime (nVM) du moteur à combustion interne (1) est prioritaire dans le temps par rapport à la variation du régime (nE) de la machine électrique (3).

8. Procédé selon l'une quelconque des revendications précédentes, **caractérisé en ce que** la boîte de vitesses automatique (5) est une boîte de vitesses à double embrayage.

9. Procédé selon l'une quelconque des revendications précédentes, **caractérisé en ce que** le rapport cible est associé à un autre élément à engagement par friction de la boîte de vitesses automatique (5) que le rapport initial, un changement avec chevauchement des capacités d'embrayage des deux éléments à engagement par friction étant effectué pendant le changement de rapport.

10. Procédé selon l'une quelconque des revendications précédentes, **caractérisé en ce que** pendant le fonctionnement en poussée, à l'instant du déclenchement manuel du changement de rapport, l'embrayage (2) est ouvert et le moteur à combustion interne (1) tourne à un régime inférieur au régime (nVM) correspondant au rapport initial et à la vitesse actuelle du véhicule automobile.
